# EUROPEAN PATENT APPLICATION

(11) **EP 4 811 736 A1**
(43) Date of publication of application: **23.09.2026**
(21) Application number: 24890756.0
(22) Date of filing: 14.11.2024
(51) Int. Cl.: H04L 41/0663, G06F 11/14

(54) **REMOTE DISASTER RECOVERY METHOD, APPARATUS AND DEVICE, AND STORAGE MEDIUM**

(30) Priority: 15.11.2023 CN 202311525842
(71) Applicant: Ruijie Networks Co., Ltd., Fuzhou, Fujian 350002 (CN)
(72) Inventor: SHI, Weiguang, Fuzhou, Fujian 350002 (CN); HUANG, Dongyuan, Fuzhou, Fujian 350002 (CN)
(74) Representative: Mathys & Squire
(86) International application number: PCT/CN2024/131980
(87) International publication number: WO 2025/103401

(57) **Abstract**

This application provides an offsite disaster recovery method and apparatus, a device, and a storage medium. The method is applied to any node in an offsite disaster recovery service, where the any node stores an environment for running a primary task of a primary node; the primary node is configured to control a network device to forward network packets; and the method includes: determining first change information, where the first change information is used to indicate that an identity of the any node changes from a backup node to a primary node, and the backup node is configured to synchronize data of the primary node; and based on the first change information, stopping synchronizing the data of the primary node and running the primary task in the environment.

## Description

### CROSS-REFERENCE TO RELATED APPLICATIONS

This application claims priority to Chinese Patent Application No. 202311525842.4, filed with the China National Intellectual Property Administration on November 15, 2023 and entitled "OFFSITE DISASTER RECOVERY METHOD AND APPARATUS, DEVICE, AND STORAGE MEDIUM", which is incorporated herein by reference in its entirety.

### TECHNICAL FIELD

This application relates to the field of disaster recovery technology and specifically relates to an offsite disaster recovery method and apparatus, a device, and a storage medium.

### BACKGROUND

A disaster recovery system refers to the establishment of two or more systems with identical functions at geographically distant locations, where one system serves as the primary site, and the others serve as backup sites. The disaster recovery solution is primarily designed to ensure system availability during primary system upgrades, operating system upgrades, hardware failures, or disasters (for example, fires, earthquakes, tsunamis, and wars), reducing service downtime and ensuring that the system provides continuous and reliable service. When the primary site fails, the backup site switches to the primary site to continue providing services externally.

In the disaster recovery solution, switching between the primary and backup sites requires manual intervention to continue providing services externally.

### SUMMARY

Embodiments of this application provide an offsite disaster recovery method and apparatus, a device, and a storage medium.

According to a first aspect, an embodiment of this application provides an offsite disaster recovery method. The method is applied to any node in an offsite disaster recovery service, where the any node stores an environment for running a primary task of a primary node; the primary node is configured to control a network device to forward network packets; and the method includes:
determining first change information, where the first change information is used to indicate that an identity of the any node changes from a backup node to a primary node, and the backup node is configured to synchronize data of the primary node; and
based on the first change information, stopping synchronizing the data of the primary node and running the primary task in the environment.

In this solution, any node, as the backup node, stores the environment for running the primary task. When the any node determines the first change information, that is, when the any node needs to change from the backup node to the primary node, the any node may directly run the primary task in the environment, thereby reducing the time required to load the environment in the backup node during the primary-backup switch, improving a switching speed between the primary and backup nodes, enhancing the overall stability of a disaster recovery system, and ensuring normal operation of the network device.

Optionally, the method further includes: loading part or all of the environment for running the primary task of the primary node. Optionally, the method further includes: acquiring usage rates of one or more resources of the any node; loading the environment when a maximum value among the usage rates of the one or more resources is less than a threshold; or loading the environment when the any node starts.

In this manner, before the primary-backup switch, the environment is loaded when the maximum usage rate of the one or more resources in the any node is less than the threshold, resulting in a low load on the any node, thereby enhancing the stability of the backup node and improving the reliability of the solution. In addition, the environment may alternatively be loaded when the any node starts, offering high flexibility in the solution.

Optionally, the determining first change information includes: generating the first change information in a case that a duration from a moment of the latest reception of heartbeat information from the primary node to a current moment exceeds a preset duration; or receiving the first change information from an arbitration device, where the arbitration device is configured to determine whether the any node needs to change the identity; or receiving the first change information input by a technician.

In this manner, the first change information may be generated when the duration from the moment of the latest reception of heartbeat information from the primary node to the current moment exceeds the preset duration, or the first change information may be received from the arbitration device or input by the technician, providing diverse sources for the first change information and improving the flexibility of the solution.

Optionally, the environment includes a first communication channel established between the any node and the network device in accordance with a southbound interface protocol and/or a second communication channel established between the any node and a client in accordance with a northbound interface protocol; and after the determining first change information and before the running the primary task in the environment, the method further includes: based on the first change information, changing a state of the first communication channel from a read-only state to a read-write state, and/or changing a state of the second communication channel from a read-only state to a read-write state.

In this manner, the environment includes the first communication channel and the second communication channel established in accordance with the southbound and northbound interface protocols, respectively; the first communication channel and the second communication channel are each in the read-only state. In this case, the backup node is unable to perform information interaction with the network device, and the backup node is also unable to perform information interaction with the client. After the first change information is determined, the states of the first communication channel and the second communication channel are changed to the read-write states, so that the any node is able to perform information interaction with the network device so as to manage the network device, and is also able to perform information interaction with the client, thereby reducing the time required for the backup node to establish the first communication channel with the network device and the second communication channel with the client during the primary-backup switch, improving the switching speed between the primary and backup nodes, and enhancing the stability of the disaster recovery system.

Optionally, the running the primary task in the environment includes: periodically requesting configuration data of the network device from the network device at preset time intervals; in a case that configuration data received in a first cycle differs from the configuration data corresponding to the network device that is stored in a database of the any node, storing the configuration data received in the first cycle in the database of the any node; and in a case that configuration data received in other cycles after the first cycle differs from the configuration data corresponding to the network device that is stored in the database of the any node, sending configuration change information to the network device, where the configuration change information is used to instruct the network device to update the configuration data to the configuration data corresponding to the network device that is stored in the database of the any node.

In this manner, since the any node, when switching from the backup node to the primary node, may not receive the latest configuration data stored in the primary node, potentially leading to data loss, the configuration data sent by the network device is used as the reference during the first request of the any node for configuration data from the network device. Since the any node, as the primary node, may instruct the network device to change configuration data, the configuration data stored in the database of the any node is used as the reference during subsequent requests of the any node for configuration data from the network device. This can ensure that the configuration data of the network device is the same as the configuration data stored in the any node. Furthermore, the manner of determining configuration data based on both parties may reduce the possibility of data loss compared to a manner of determining configuration data by taking one of the network device or the any node as the reference.

It can be understood that the above is merely an example and not a limitation; and the primary task may further include other tasks, and the embodiments of this application impose no restrictions.

Optionally, the any node includes multiple business microservices, where each business microservice is in a standby state. The stopping synchronization of the data of the primary node and running the primary task in the environment based on the first change information includes: based on the first change information and a state transition table corresponding to each business microservice, changing the state of each business microservice from the standby state to a primary state for executing the primary task, where the state transition table is used to indicate a state transition of each business microservice.

In this manner, the any node includes multiple business microservices, where each business microservice is in a standby state with an environment for running each business microservice stored. After the first change information is determined, the state of each business microservice changes from the standby state to the primary state based on the state transition table, reducing the time required to load the environment for running business microservices during the primary-backup switch, improving the switching speed between the primary and backup nodes, and enhancing the stability of the disaster recovery system.

Optionally, the standby state is a state in which part or all of the environment for running each business microservice is loaded.

Optionally, the method further includes: determining second change information, where the second change information is used to indicate that the identity of the any node changes from the primary node to the backup node; and based on the second change information, stopping running the primary task and starting to synchronize the data of the primary node.

In this manner, the any node serves as the primary node. After determining the second change information, the any node changes from the primary node to the backup node, preventing issues such as service contention or duplicate service issuance caused by two primary nodes, thereby enhancing the stability of the disaster recovery system.

Optionally, the synchronizing the data of the primary node includes: receiving the data from the primary node and storing the data of the primary node in the database of the any node. The method further includes: loading designated data from the database of the any node into a memory of the any node.

In this manner, when the any node is the backup node, the designated data from the database is loaded into the memory, where the designated data may be data required for the primary task, for example, an environment for running the primary task, thereby improving the primary-backup switching speed when the any node changes from the backup node to the primary node.

Optionally, the receiving the data from the primary node includes: sending a data synchronization request to the primary node, where the data synchronization request is used to request data from the primary node; and receiving the data from the primary node. In this manner, the backup node sends a data synchronization request to the primary node so as to acquire the data of the primary node, eliminating the need for the primary node to monitor whether the backup node has received the data, allowing for a small load on the primary node, and enhancing the stability of the disaster recovery system.

According to a second aspect, an embodiment of this application provides an offsite disaster recovery apparatus. The apparatus is applied to any node in an offsite disaster recovery service, where the any node stores an environment for running a primary task of a primary node; the primary node is configured to control a network device to forward network packets; and the apparatus includes modules/units/technical means for performing the method in the first aspect or any optional implementation of the first aspect.

Exemplarily, the apparatus may include:
a determining module configured to determine first change information, where the first change information is used to indicate that an identity of the first node changes from a backup node to a primary node, and the backup node is configured to synchronize data of the primary node; and
a processing module configured to, based on the first change information, stop synchronizing the data of the primary node and run the primary task in the environment.

Optionally, the processing module is further configured to: load part or all of the environment for running the primary task of the primary node.

Optionally, the processing module is further configured to: acquire usage rates of one or more resources of the any node; load the environment when a maximum value among the usage rates of the one or more resources is less than a threshold; or load the environment when the any node starts.

Optionally, when determining the first change information, the determining module is specifically configured to: generate the first change information in a case that a duration from a moment of the latest reception of heartbeat information from the primary node to a current moment exceeds a preset duration; or receive the first change information from an arbitration device, where the arbitration device is configured to determine whether the any node needs to change an identity; or receive the first change information input by a technician.

Optionally, the environment includes a first communication channel established between the any node and the network device in accordance with a southbound interface protocol and/or a second communication channel established between the any node and a client in accordance with a northbound interface protocol. After determining the first change information and before running the primary task in the environment, the processing module is further configured to: based on the first change information, change a state of the first communication channel from a read-only state to a read-write state, and/or change a state of the second communication channel from a read-only state to a read-write state.

Optionally, when running the primary task in the environment, the processing module is specifically configured to: periodically request configuration data of the network device from the network device at preset time intervals; in a case that configuration data received in the first cycle differs from the configuration data corresponding to the network device that is stored in a database of the any node, store the configuration data received in the first cycle in the database of the any node; and in a case that configuration data received in other cycles after the first cycle differs from the configuration data corresponding to the network device that is stored in the database of the any node, send configuration change information to the network device, where the configuration change information is used to instruct the network device to update the configuration data to the configuration data corresponding to the network device that is stored in the database of the any node.

Optionally, the any node includes multiple business microservices, where each business microservice is in a standby state. When stopping synchronizing the data of the primary node and running the primary task in the environment based on the first change information, the processing module is specifically configured to: based on the first change information and a state transition table corresponding to each business microservice, change a state of each business microservice from the standby state to a primary state for executing the primary task, where the state transition table is used to indicate a state transition of each business microservice.

Optionally, the standby state is a state in which part or all of the environment for running each business microservice is loaded.

Optionally, the determining module is further configured to: determine second change information, where the second change information is used to indicate that the identity of the any node changes from the primary node to the backup node. The processing module is further configured to: based on the second change information, stop running the primary task and start synchronizing the data of the primary node.

Optionally, when synchronizing the data of the primary node, the processing module is specifically configured to: receive data from the primary node and store the data of the primary node in a database of the any node. The method further includes: loading designated data from the database of the any node into a memory of the any node.

Optionally, when receiving data from the primary node, the processing module is specifically configured to: send a data synchronization request to the primary node, where the data synchronization request is used to request the data from the primary node; and receive the data from the primary node.

According to a third aspect, an embodiment of this application provides an electronic device including: at least one processor; and a memory communicatively connected to the at least one processor; where the memory stores instructions executable by the at least one processor, and the at least one processor executes the instructions stored in the memory to enable the at least one processor to perform the steps of the offsite disaster recovery method of the first aspect.

According to a fourth aspect, an embodiment of this application provides a computer-readable storage medium, where the computer-readable storage medium stores a computer program, the computer program includes program instructions, and when the program instructions are executed by a computer, the computer performs the steps of the offsite disaster recovery method of the first aspect.

In addition, other features and advantages of this application will be described in the subsequent description and partially become apparent from the description, or may be learned by implementing this application. The objectives and other advantages of this application may be realized and obtained through the structures particularly pointed out in the written description, claims, and drawings.

### BRIEF DESCRIPTION OF DRAWINGS

To more clearly illustrate the technical solutions in the embodiments of this application or in the prior art, the drawings required for describing the embodiments are briefly described below. Apparently, the drawings described below are only some embodiments of this application, and those of ordinary skill in the art can obtain other drawings based on the provided drawings without creative effort.
FIG. 1 is a schematic diagram of a scenario according to an embodiment of this application.
FIG. 2 is a flowchart of an offsite disaster recovery method according to an embodiment of this application.
FIG. 3 is a flowchart of another offsite disaster recovery method according to an embodiment of this application.
FIG. 4 is a structural diagram of an offsite disaster recovery apparatus according to an embodiment of this application.
FIG. 5 is a structural diagram of an electronic device according to an embodiment of this application.

### DESCRIPTION OF EMBODIMENTS

To make the objectives, technical solutions, and advantages of this application clearer, the technical solutions in the embodiments of this application will be described clearly and thoroughly below with reference to the drawings in the embodiments of this application. Apparently, the described embodiments are only some rather than all embodiments of this application. Based on the embodiments in this application, all other embodiments obtained by those of ordinary skill in the art without creative effort fall within the scope of protection of this application. In the absence of conflict, the embodiments and features in the embodiments of this application can be arbitrarily combined with each other. Furthermore, although a logical order is shown in the flowchart, in some cases, the steps shown or described may be performed in an order different from that shown here.

The terms "first" and "second" in the description, claims, and drawings of this application are used to distinguish different objects rather than to describe a specific order. Additionally, the term "include" and any variations thereof are intended to cover non-exclusive inclusion. For example, a process, method, system, product, or device that includes a series of steps or units is not limited to the listed steps or units but may optionally include unlisted steps or units or other steps or units inherent to these processes, methods, products, or devices. The term "multiple" in this application may mean at least two, such as two, three, or more, and the embodiments of this application impose no restrictions.

In addition, the terms "and/or" in this specification merely describe an association relationship between related objects, indicating that three relationships may exist. For example, A and/or B may indicate: A exists alone, both A and B exist, or B exists alone. Additionally, the character "/" in this specification, unless otherwise specified, generally indicates that the related objects before and after it are in an "or" relationship.

Before the embodiments of this application are described, some technical features in this application are described to facilitate understanding by those skilled in the art.
(1) Software defined network (Software Defined Network, SDN): A network architecture that separates a control plane from a data plane of a network device.
(2) SDN controller: In the SDN architecture, unified management of all network devices is achieved through southbound interface protocols such as OpenFlow and Netconf, enabling rapid deployment, resource integration, unified planning, and on-demand invocation.
(3) Offsite disaster recovery: One or more identical systems are established at different geographical locations to take over immediately after a disaster.
(4) Site: A specified system is deployed at a specific geographical location, where a system at a specific geographical location is referred to as a site. In the embodiments of this application, a site includes a primary site and a backup site.
(5) Primary site and backup site: When an offsite disaster recovery relationship is established, one site serves as a primary site, and the others serve as backup sites. The primary site is configured to provide services externally, while the backup site is not configured to provide services externally but is configured to synchronize data from the primary site. Typically, the backup sites only run services related to offsite disaster recovery and do not start other services. The identities of the primary site and the backup sites can switch.
(6) Arbitration device: An arbitration device is located at other locations except a primary site and a backup site and is configured to deploy arbitration services to assist in failover decisions, avoiding issues such as service contention or duplicate service issuance when multiple primary sites exist.

A disaster recovery system refers to that two or more systems with identical functions are established at geographically distant locations, where one system serves as a primary site, and the others serve as backup sites. The disaster recovery solution is primarily designed to ensure system availability during primary system upgrades, operating system upgrades, hardware failures, or disasters (for example, fires, earthquakes, tsunamis, and wars), reducing service downtime and ensuring that the system provides continuous and reliable service. When the primary site fails, the backup site switches to the primary site to continue providing services externally.

The technical solution in the disaster recovery solution requiring manual switching between primary and backup sites results in long recovery time, affects the normal operation of network devices, and leads to poor overall stability of the disaster recovery system.

Embodiments of this application provide an offsite disaster recovery method and apparatus, a device, and a storage medium to improve a switching speed between primary and backup sites.

To facilitate understanding of the technical solutions provided by the embodiments of this application, the application scenarios used by the technical solutions are briefly described below. It should be noted that the application scenarios described below are only used to illustrate the embodiments of this application rather than to limit. In specific implementations, the technical solutions provided by the embodiments of this application can be flexibly applied according to actual needs.

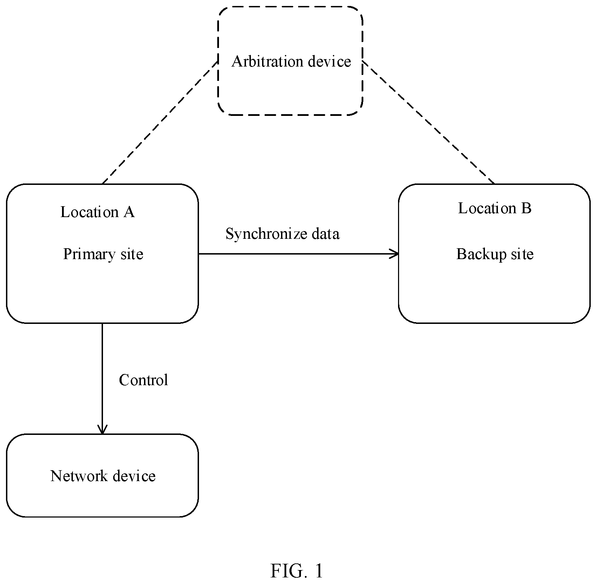

Referring to FIG. 1, FIG. 1 is a schematic diagram of a scenario according to an embodiment of this application. This scenario includes one primary site, multiple backup sites, and multiple network devices (only one backup site and one network device are shown in the figure, but the actual number is not limited to this). Optionally, the scenario may also include an arbitration device (optionally indicated by a dashed line).

The scenario shown in FIG. 1 is an SDN architecture, where the primary site is configured to manage multiple network devices. The backup site is not configured to manage multiple network devices but is configured to synchronize data from the primary site. The network devices are configured to forward network packets to achieve network communication. The primary site and the backup sites are SDN controllers.

Each site may include one or more servers. Each server has multiple microservices. Each site adopts a microservice architecture. That is, each site includes multiple microservices. The multiple microservices are distributed on one or more servers. A server is referred to as a node within a site. That is, one node has multiple microservices. In the embodiments of this application, the microservices include disaster recovery microservices and business microservices.

In this embodiment of this application, servers in the primary site are referred to as primary nodes. Servers in the backup site are referred to as backup nodes. When an identity of a site switches from a primary site to a backup site, it means that an identity of a node in the site switches from a primary node to a backup node. When an identity of a site switches from a backup site to a primary site, it means that an identity of a node in the site switches from a backup node to a primary node.

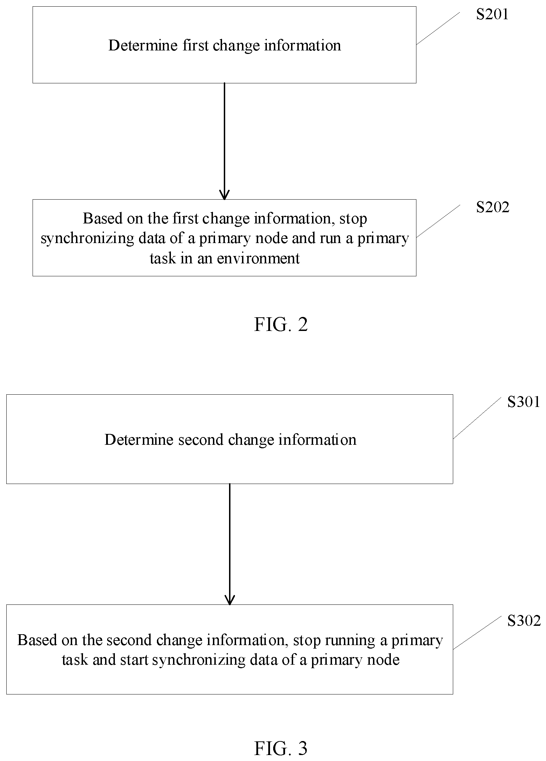

For the above scenario, an offsite disaster recovery method provided by this application is described in detail below with reference to the drawings in the description. FIG. 2 shows an offsite disaster recovery method according to an embodiment of this application. The method is applied to a scenario shown in FIG. 1 where an identity of any node changes from a backup node to a primary node. The any node stores an environment for running a primary task of a primary node. The environment stored in the any node is a loaded environment. The method includes the following steps.

S201: Determine first change information.

The first change information is used to indicate that the identity of the any node changes from the backup node to the primary node.

In one possible implementation, the any node includes a disaster recovery microservice. The disaster recovery microservice is configured to determine the first change information.

A disaster recovery microservice refers to a capability of a node to ensure rapid and effective recovery of business operations in the event of a disaster through a series of technologies and strategies.

In one possible implementation, the any node loads the environment for running the primary task upon startup, where "upon startup" refers to the initialization startup, that is, the start of loading; or usage rates of one or more resources are acquired, and the environment is loaded when a maximum usage rate among the usages rates of the one or more resources is less than a threshold. The one or more resources include the following resources: a CPU (Central Processing Unit, central processing unit), disk I/O (Input/Output, input/output), and a memory.

It can be understood that the any node can load part or all of the environment upon startup or when the maximum usage rate of one or more resources is less than a threshold. If the any node has loaded part of the environment, the any node loads the remaining environment after determining the first change information, and the embodiments of this application impose no restrictions. Exemplarily, loading the environment includes instance loading in the framework, thread pool initialization, and the like.

In one possible implementation, the any node further includes multiple business microservices, where each business microservice is in a standby state. Each business microservice is configured to execute the primary task when the node transitions from a standby state to a primary state. The standby state is a state in which part or all of an environment for running each business microservice is loaded. In other words, loading the environment by the any node means loading the environment for running each business microservice. If the any node has loaded the entire environment, each business microservice has the capability to run codes normally.

In this manner, the environment for the primary task can be loaded when the any node starts, or the environment is loaded before the primary-backup switch when the maximum usage rate among the usage rates of the one or more resources in the any node is less than the threshold, resulting in a low load on the any node, thereby enhancing the stability of the backup node and improving the reliability of the solution.

In one possible implementation, cases where the first change information is determined include the following scenarios: A heartbeat connection is present between the backup node and the primary node. If a duration from a moment of the latest reception of heartbeat information from the primary node by the any node to a current moment exceeds a preset duration, the any node generates the first change information. Alternatively, after the arbitration device determines that the primary site has failed, the arbitration device sends the first change information to the any node, and the any node receives the first change information from the arbitration device, where the arbitration device determines that the primary site has failed when a certain number of primary nodes in the primary site fail. Alternatively, the any node receives the first change information input by a technician.

It can be understood that there may be other ways to determine the first change information, and the embodiments of this application impose no restrictions.

In this manner, the first change information may be generated when the duration from the moment of the latest reception of heartbeat information from the primary node to the current moment exceeds the preset duration, or the first change information may be received from the arbitration device or input by the technician, providing diverse sources for the first change information and improving the flexibility of the solution.

S202: Based on the first change information, stop synchronizing data of the primary node and run the primary task in the environment.

In one possible implementation, the any node includes business microservices. The business microservices are configured to, based on the first change information, stop synchronizing the data of the primary node and run the primary task in the environment. Specifically, after determining the first change information, the disaster recovery microservice sends a message to Kafka (Kafka) message middleware, where the message is used to instruct each business microservice to acquire the first change information from the disaster recovery microservice. Each business microservice subscribes to the Kafka (Kafka) message middleware and acquires the message. After receiving the message, each business microservice sends a request to the disaster recovery microservice so as to request the disaster recovery microservice to send the first change information. After receiving the request, the disaster recovery microservice sends the first change information to each business microservice. Each business microservice determines its state as a standby state. Based on the standby state, the first change information, and a state transition table corresponding to each business microservice, each business microservice changes its state from the standby state to a primary state for executing the primary task, where the state transition table is used to indicate a state transition of each business microservice.

In this manner, the any node includes multiple business microservices, where each business microservice is in a standby state with an environment for running each business microservice stored. After the first change information is determined, the state of each business microservice changes from the standby state to the primary state based on the state transition table, reducing the time required to load the environment for running business microservices during the primary-backup switch, improving a switching speed between the primary and backup nodes, and enhancing the stability of a disaster recovery system.

In one possible implementation, the environment includes a first communication channel established between the any node and a network device in accordance with a southbound interface protocol. The any node, based on the first change information, changes a state of the first communication channel from a read-only state to a read-write state and then runs the primary task in the environment. The southbound interface protocol is a communication protocol between an SDN controller and the network device.

It can be understood that the type of the southbound interface protocol may be configured according to actual needs, such as Netconf, and the embodiments of this application impose no restrictions.

Optionally, the environment further includes a second communication channel established between the any node and a client in accordance with a northbound interface protocol. The any node, based on the first change information, changes a state of the second communication channel from a read-only state to a read-write state. Then, the any node interacts with the client through the second communication channel. The northbound interface protocol is a communication protocol between the SDN controller and the client. The client may be a browser, a third-party system, an application software, or the like, and the embodiments of this application impose no restrictions.

In one possible implementation, based on the first change information, the any node starts a database change script, where the database change script is used to update a version of the database and update a table structure of the database.

In one possible implementation, the any node synchronizing the data of the primary node refers to that the any node receives data from the primary node and stores the data of the primary node in a database of the any node, specifically including one or more of the following: The any node synchronizes business configuration data based on PostgreSQL streaming replication capabilities. The any node synchronizes file data such as certificates and software packages based on Syncthing real-time file synchronization technology. Alternatively, the any node periodically loads designated data from the database into the memory of the any node. The any node running the primary task in the environment specifically includes one or more of the following: starting the database change script, where the database change script is used to update the version of the database and update the table structure of the database; monitoring a device state of the network device and sending alert information to a device of a technician when the network device is abnormal, where the alert information is used to indicate that the network device is abnormal; periodically requesting configuration data of the network device from the network device at preset time intervals; issuing network configuration; or periodically orchestrating network topology at preset time intervals.

Optionally, when the any node serves as the backup node, specific operations for receiving data from the primary node are as follows: Data in both the any node and the primary node is stored in a form of a log. Each log has a corresponding sequence number. The any node sends a data synchronization request to the primary node. The data synchronization request is used to request data from the primary node, and the data synchronization request includes a sequence number corresponding to a log currently stored in the any node. The primary node determines a log not stored in the any node based on the sequence number included in the data synchronization request and the sequence number of the log stored in the primary node, and sends the log to the any node. The any node stopping synchronization of the data of the primary node based on the first change information can be understood as the any node stopping sending the data synchronization request. It can be understood that the any node may also receive data actively sent by the primary node to achieve data synchronization, and the embodiments of this application impose no restrictions.

Optionally, in a case that the any node periodically requests configuration data of the network device from the network device at preset time intervals, when requesting configuration data in a first cycle, the any node uses the configuration data sent by the network device as the reference. That is, in a case that the configuration data received in the first cycle differs from the configuration data corresponding to the network device that is stored in the database of the any node, the configuration data received in the first cycle is stored in the database of the any node. In other cycles after the first cycle, the configuration data corresponding to the network device that is stored in the database of the any node is used as a reference. That is, in a case that the configuration data sent by the network device differs from the configuration data corresponding to the network device that is stored in the database of the any node, the any node sends configuration change information to the network device to make the configuration data of the network device be the same as the configuration data corresponding to the network device that is stored in the database of the any node. The configuration change information is used to instruct the configuration data of the network device to be updated to the configuration data corresponding to the network device that is stored in the database of the any node.

In this manner, since the any node, when switching from the backup node to the primary node, may not receive the latest configuration data stored in the primary node, potentially leading to data loss, the configuration data sent by the network device is used as the reference during the first request of the any node for configuration data from the network device. Since the any node, as the primary node, may instruct the network device to change configuration data, the configuration data stored in the database of the any node is used as the reference during subsequent requests of the any node for configuration data from the network device. This can ensure that the configuration data of the network device is the same as the configuration data stored in the any node. Furthermore, the manner of determining configuration data based on both parties may reduce the possibility of data loss compared to a manner of determining configuration data by taking one of the network device or the any node as the reference.

It can be understood that the primary task may further include other tasks, and the embodiments of this application impose no restrictions.

In the above solutions S201 and S202, the any node, as the backup node, stores the environment for running the primary task. When the any node determines the first change information, that is, when the any node needs to change from the backup node to the primary node, the any node may directly run the primary task in the environment, thereby reducing the time required to load the environment in the backup node during the primary-backup switch, improving the switching speed between the primary and backup nodes, enhancing the overall stability of the disaster recovery system, and ensuring normal operation of the network device.

FIG. 3 shows an offsite disaster recovery method according to an embodiment of this application. The method is applied to a scenario shown in FIG. 1 where an identity of any node changes from a primary node to a backup node. The method includes the following steps.

S301: Determine second change information.

The second change information is used to indicate that the identity of the any node changes from the primary node to the backup node.

In one possible implementation, the any node includes a disaster recovery microservice. The disaster recovery microservice is configured to determine the second change information.

In one possible implementation, cases where the second change information is determined include the following scenarios: After the primary site recovers from a disaster, in a scenario without arbitration, a disaster recovery microservice of the primary site sends the second change information to any node in the primary site. In a scenario with arbitration, after determining that the primary site has a disaster, an arbitration device sends the second change information to any node in the primary site, and the any node receives the second change information from the arbitration device. Alternatively, the any node in the primary site receives the second change information input by a technician.

It can be understood that there may be other ways to determine the second change information, and the embodiments of this application impose no restrictions.

S302: Based on the second change information, stop running a primary task and start synchronizing data of the primary node.

In one possible implementation, the any node further includes multiple business microservices. The business microservices are configured to execute the primary task. After determining the second change information, the disaster recovery microservice sends a message to Kafka (Kafka) message middleware, where the message is used to instruct each business microservice to acquire the second change information from the disaster recovery microservice. Each business microservice subscribes to the Kafka (Kafka) message middleware and acquires the message. After receiving the message, each business microservice sends a request to the disaster recovery microservice so as to request the disaster recovery microservice to send the second change information. After receiving the request, the disaster recovery microservice sends the second change information to each business microservice. Each business microservice determines its state as a primary state for executing the primary task. Based on the primary state, the second change information, and a state transition table corresponding to each business microservice, each business microservice changes its state from the primary state to a standby state with the environment for running each business microservice loaded, where the state transition table is used to indicate a state transition of each business microservice.

In one possible implementation, the environment includes a first communication channel established between the any node and a network device in accordance with a southbound interface protocol. The any node, based on the second change information, changes a state of the first communication channel from a read-write state to a read-only state. The southbound interface protocol is a communication protocol between an SDN controller and the network device.

It can be understood that the type of the southbound interface protocol may be configured according to actual needs, such as Netconf, and the embodiments of this application impose no restrictions.

Optionally, the environment further includes a second communication channel established between the any node and a client in accordance with a northbound interface protocol. The any node, based on the second change information, changes a state of the second communication channel from a read-write state to a read-only state. The northbound interface protocol is a communication protocol between the SDN controller and the client.

In one possible implementation, based on the second change information, the any node stops a database change script, where the database change script is used to update a version of the database and update a table structure of the database.

In one possible implementation, the any node synchronizing the data of the primary node refers to that the any node receives data from the primary node and stores the data of the primary node in a database of the any node, specifically including one or more of the following: The any node synchronizes business configuration data based on PostgreSQL (relational database management system) streaming replication capabilities. Alternatively, the any node synchronizes file data such as certificates and software packages based on Syncthing (open-source file synchronization tool) real-time file synchronization technology. The any node running the primary task in the environment specifically includes one or more of the following: starting the database change script, where the database change script is used to update the version of the database and update the table structure of the database; monitoring a device state of the network device and sending alert information to a device of a technician when the network device is abnormal, where the alert information is used to indicate that the network device is abnormal; periodically requesting configuration data of the network device from the network device at preset time intervals; issuing network configuration; or periodically orchestrating network topology at preset time intervals.

Preferably, when the any node serves as the backup node, specific operations for receiving data from the primary node are as follows: Data in both the any node and the primary node is stored in a form of a log. Each log has a corresponding sequence number. The any node sends a data synchronization request to the primary node. The data synchronization request is used to request data from the primary node, and the data synchronization request includes a sequence number corresponding to a log currently stored in the any node. The primary node determines a log not stored in the any node based on the sequence number included in the data synchronization request and the sequence number of the log stored in the primary node, and sends the log to the any node.

It can be understood that the any node may also receive data actively sent by the primary node to achieve data synchronization, and the embodiments of this application impose no restrictions.

It can be understood that the primary task may further include other tasks, and the embodiments of this application impose no restrictions.

In the above solutions S301 and S302, the any node serves as the primary node. After determining the second change information, the any node changes from the primary node to the backup node, preventing issues such as service contention or duplicate service issuance caused by two primary nodes, thereby enhancing the stability of the disaster recovery system.

Additionally, when there are two nodes, node 1 serves as the primary node and node 2 serves as the backup node. If a primary-backup switch is performed for these two nodes, node 2 can execute the above solutions S201 and S202, and node 1 can execute the above solutions S301 and S302, both of which can be performed simultaneously, and the embodiments of this application impose no restrictions.

The above describes the method according to the embodiments of this application. An apparatus according to an embodiment of this application is described below.

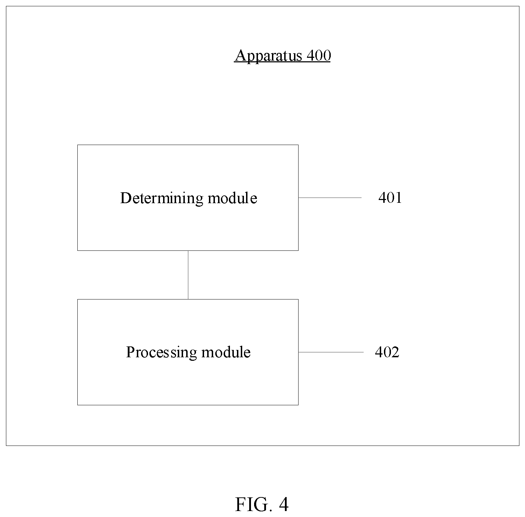

Referring to FIG. 4, an embodiment of this application provides an offsite disaster recovery apparatus 400. The apparatus includes modules/units/technical means for performing the method in the above method embodiments performed by any node in an offsite disaster recovery service. The any node stores an environment for running a primary task of a primary node. The primary node is configured to control a network device to forward network packets.

Exemplarily, the apparatus 400 includes:
a determining module 401 configured to determine first change information, where the first change information is used to indicate that an identity of the first node changes from a backup node to a primary node, and the backup node is configured to synchronize data of the primary node; and
a processing module 402 configured to, based on the first change information, stop synchronizing the data of the primary node and run the primary task in the environment.

Optionally, the processing module 402 is further configured to: load part or all of the environment for running the primary task of the primary node.

Optionally, the processing module 402 is further configured to: acquire usage rates of one or more resources of the any node; load the environment when a maximum value among the usage rates of the one or more resources is less than a threshold; or load the environment when the any node starts.

Optionally, when determining the first change information, the determining module 401 is specifically configured to: generate the first change information in a case that a duration from a moment of the latest reception of heartbeat information from the primary node to a current moment exceeds a preset duration; or receive the first change information from an arbitration device, where the arbitration device is configured to determine whether the any node needs to change an identity; or receive the first change information input by a technician.

Optionally, the environment includes a first communication channel established between the any node and the network device in accordance with a southbound interface protocol and/or a second communication channel established between the any node and a client in accordance with a northbound interface protocol. After determining the first change information and before running the primary task in the environment, the processing module 402 is further configured to: based on the first change information, change a state of the first communication channel from a read-only state to a read-write state, and/or change a state of the second communication channel from a read-only state to a read-write state.

Optionally, when running the primary task in the environment, the processing module 402 is specifically configured to: periodically request configuration data of the network device from the network device at preset time intervals; in a case that configuration data received in the first cycle differs from the configuration data corresponding to the network device that is stored in a database of the any node, store the configuration data received in the first cycle in the database of the any node; and in a case that the configuration data received in other cycles after the first cycle differs from the configuration data corresponding to the network device that is stored in the database of the any node, send configuration change information to the network device, where the configuration change information is used to instruct the network device to update the configuration data to the configuration data corresponding to the network device that is stored in the database of the any node.

Optionally, the any node includes multiple business microservices, where each business microservice is in a standby state. When stopping synchronizing the data of the primary node and running the primary task in the environment based on the first change information, the processing module 402 is specifically configured to: based on the first change information and a state transition table corresponding to each business microservice, change a state of each business microservice from the standby state to a primary state for executing the primary task, where the state transition table is used to indicate a state transition of each business microservice.

Optionally, the standby state is a state in which part or all of the environment for running each business microservice is loaded.

Optionally, the determining module 401 is further configured to: determine second change information, where the second change information is used to indicate that the identity of the any node changes from the primary node to the backup node. The processing module 402 is further configured to: based on the second change information, stop running the primary task and start synchronizing the data of the primary node.

Optionally, when synchronizing the data of the primary node, the processing module 402 is specifically configured to: receive data from the primary node and store the data of the primary node in a database of the any node. The method further includes: loading designated data from the database of the any node into a memory of the any node.

Optionally, when receiving data from the primary node, the processing module 402 is specifically configured to: send a data synchronization request to the primary node, where the data synchronization request is used to request the data from the primary node; and receive the data from the primary node.

It should be understood that all relevant content of the steps involved in the above method embodiments can be cited in the functional description of the corresponding functional modules. Details are not repeated herein.

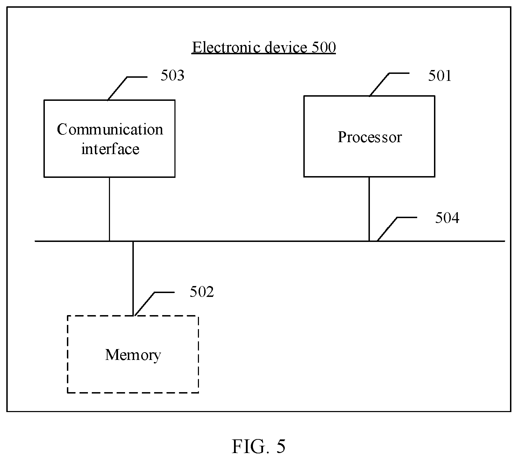

As a possible product form of the above apparatus, referring to FIG. 5, an embodiment of this application further provides an electronic device 500 including:
at least one processor 501; and a communication interface 503 communicatively connected to the at least one processor 501; where the at least one processor 501 executes instructions stored in a memory 502 to enable the electronic device 500 to perform the method in the embodiments shown in FIG. 2 or FIG. 3 through the communication interface 503.

Optionally, the memory 502 is located outside the electronic device 500.

Optionally, the electronic device 500 includes the memory 502, where the memory 502 is connected to the at least one processor 501, and the memory 502 stores instructions executable by the at least one processor 501. FIG. 5 indicates with a dashed line that the memory 502 is optional for the electronic device 500.

The processor 501 and the memory 502 may be coupled through an interface circuit or integrated together, with no restrictions here.

This embodiment of this application does not limit a specific connection medium among the processor 501, the memory 502, and the communication interface 503. In this embodiment of this application, FIG. 5 shows the processor 501, the memory 502, and the communication interface 503 connected through a bus 504, where the bus is represented by a thick line in FIG. 5. A connection method between other components is merely illustrative and is not limited to this. The bus may be divided into an address bus, a data bus, a control bus, and the like. For ease of representation, FIG. 5 uses only one thick line to represent the bus, but this does not mean there is only one bus or one type of bus.

It should be understood that the processor mentioned in this embodiment of this application may be implemented by hardware or software. When implemented by hardware, the processor may be a logic circuit, an integrated circuit, or the like. When implemented by software, the processor may be a general-purpose processor implemented by reading software code stored in a memory.

Exemplarily, the processor may be a Central Processing Unit (Central Processing Unit, CPU), or another general-purpose processor, a digital signal processor (Digital Signal Processor, DSP), an application specific integrated circuit (Application Specific Integrated Circuit, ASIC), a field programmable gate array (Field Programmable Gate Array, FPGA), or another programmable logic device, a discrete gate or transistor logic device, a discrete hardware component, or the like. The general-purpose processor may be a microprocessor, or the processor may be any conventional processor or the like.

It should be understood that the memory mentioned in this embodiment of this application may be a volatile memory or a non-volatile memory, or may include both volatile and non-volatile memories. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM) used as an external cache. Through illustrative but not restrictive description, many forms of RAM are available, such as static random access memory (Static RAM, SRAM), a dynamic random access memory (dynamic RAM, DRAM), a synchronous random access memory (Synchronous DRAM, SDRAM), a double data rate synchronous dynamic random access memory (Double Data Eate SDRAM, DDR SDRAM), an enhanced synchronous dynamic random access memory (Enhanced SDRAM, ESDRAM), a synchronous link dynamic random access memory (Synchlink DRAM, SLDRAM), and a direct memory bus random access memory (Direct Rambus RAM, DR RAM).

It should be noted that when the processor is a general-purpose processor, DSP, ASIC, FPGA, or another programmable logic device, a discrete gate or transistor logic device, or a discrete hardware component, the memory (storage module) may be integrated into the processor.

It should be noted that the memory described herein is intended to include but is not limited to these and any other suitable types of memories.

As another possible product form, an embodiment of this application further provides a computer-readable storage medium. The computer-readable storage medium is configured to store instructions, where when the instructions are executed, a computer performs the method in the embodiments shown in FIG. 2 or FIG. 3.

Those skilled in the art should understand that the embodiments of this application may be provided as a method, system, or computer program product. Therefore, this application may take the form of an entirely hardware embodiment, an entirely software embodiment, or an embodiment combining software and hardware aspects. Moreover, this application may take the form of a computer program product implemented on one or more computer-usable storage media (including but not limited to disk storage, CD-ROM, optical storage, and the like) containing computer-usable program code.

This application is described with reference to flowcharts and/or block diagrams of the method, apparatus (system), and computer program product according to this application. It should be understood that each process and/or block in the flowcharts and/or block diagrams, and combinations of processes and/or blocks in the flowcharts and/or block diagrams can be implemented by computer program instructions. These computer program instructions may be provided to a processor of a general-purpose computer, a special-purpose computer, an embedded processor, or another programmable data processing device to produce a machine, such that the instructions executed by the processor of the computer or the another programmable data processing device produce an apparatus for implementing the functions specified in one or more processes of the flowchart and/or one or more blocks of the block diagram.

These computer program instructions may also be stored in a computer-readable memory capable of directing a computer or another programmable data processing device to operate in a specific manner, such that the instructions stored in the computer-readable memory produce a product including an instruction apparatus. The instruction apparatus implements the functions specified in one or more processes of the flowchart and/or one or more blocks of the block diagram.

These computer program instructions may also be loaded onto a computer or another programmable data processing device, such that a series of operational steps are performed on the computer or the another programmable device to produce a computer-implemented process. Therefore, the instructions executed on the computer or the another programmable device provide steps for implementing the functions specified in one or more processes of the flowchart and/or one or more blocks of the block diagram.

Apparently, those skilled in the art can make various modifications and variations to this application without departing from the scope of this application. Thus, if these modifications and variations of this application fall within the scope of the claims of this application and their equivalent technologies, this application is intended to include these modifications and variations.

## Claims

1. An offsite disaster recovery method, wherein the method is applied to a first node in an offsite disaster recovery service, the first node storing an environment for running a primary task of a primary node; the primary node is configured to control a network device to forward network packets; and the method comprises:
determining first change information, wherein the first change information is used to indicate that an identity of the first node changes from a backup node to a primary node, and the backup node is configured to synchronize data of the primary node; and
based on the first change information, stopping synchronizing the data of the primary node and running the primary task in the environment.

2. The method according to claim 1, wherein the first node comprises at least one first disaster recovery microservice and at least one first business microservice; and the method comprises:
the at least one first disaster recovery microservice is configured to determine the first change information; and
the at least one first business microservice is configured to, based on the first change information, stop synchronizing the data of the primary node and run the primary task in the environment.

3. The method according to claim 1, wherein before the running the primary task in the environment, the method further comprises:
acquiring usage rates of one or more resources of the first node, and loading the environment when a maximum value among the usage rates of the one or more resources is less than a threshold; or
loading the environment when the first node starts.

4. The method according to claim 1, wherein the determining first change information comprises:
determining the first change information in a case that a duration from a moment of the latest reception of heartbeat information from the primary node to a current moment exceeds a preset duration; or
receiving the first change information from an arbitration device, wherein the arbitration device is configured to determine the first change information; or
receiving the first change information input by a technician.

5. The method according to claim 1, wherein the environment comprises a first communication channel established between the first node and the network device in accordance with a southbound interface protocol and/or a second communication channel established between the first node and a client in accordance with a northbound interface protocol; and
after the determining first change information and before the running the primary task in the environment, the method further comprises:
based on the first change information, changing a state of the first communication channel from a read-only state to a read-write state, and/or changing a state of the second communication channel from a read-only state to a read-write state.

6. The method according to claim 1, wherein after the determining first change information, the method further comprises:
based on the first change information, starting a database change script of the first node, wherein the database change script of the first node is used to update a version of the database and/or update a table structure of the database.

7. The method according to claim 1, wherein before the stopping synchronizing the data of the primary node based on the first change information, the method comprises:
synchronizing, by the first node, the data of the primary node, comprising receiving the data from the primary node and storing the data of the primary node in a database of any node.

8. The method according to any one of claims 1 to 7, wherein the running the primary task in the environment comprises: periodically requesting configuration data of the network device from the network device at preset time intervals;
in a case that configuration data received in a first cycle differs from the configuration data corresponding to the network device that is stored in a database of the first node, storing the configuration data received in the first cycle in the database of the first node; and
in a case that configuration data received in other cycles after the first cycle differs from the configuration data corresponding to the network device that is stored in the database of the first node, sending configuration change information to the network device, wherein the configuration change information is used to instruct the network device to update the configuration data to the configuration data corresponding to the network device that is stored in the database of the first node.

9. The method according to claim 2, wherein that the at least one first business microservice is configured to, based on the first change information, stop synchronizing the data of the primary node and run the primary task in the environment comprises:
based on the first change information and a state transition table corresponding to each first business microservice in the at least one first business microservice, changing a state of each first business microservice from a standby state to a primary state for executing the primary task, wherein the state transition table is used to indicate a state transition of each first business microservice.

10. An offsite disaster recovery method, wherein the method is applied to a second node in an offsite disaster recovery service, the second node being configured to control a network device to forward network packets; and the method comprises:
determining second change information, wherein the second change information is used to indicate that an identity of the second node changes from a primary node to a backup node; and
based on the second change information, stopping running a primary task.

11. The method according to claim 10, wherein the second node comprises at least one second disaster recovery microservice and at least one second business microservice; and the method comprises:
the at least one second disaster recovery microservice is configured to determine the second change information; and
the at least one second business microservice is configured to, based on the second change information, stop running the primary task.

12. The method according to claim 10, wherein the determining second change information comprises:
receiving the second change information from an arbitration device, wherein the arbitration device is configured to determine the second change information; or
receiving the second change information input by a technician.

13. The method according to claim 10, wherein the environment comprises a third communication channel established between the second node and the network device in accordance with a southbound interface protocol and/or a fourth communication channel established between the second node and a client in accordance with a northbound interface protocol; and the method further comprises:
based on the second change information, changing a state of the third communication channel from a read-write state to a read-only state, and/or changing a state of the fourth communication channel from a read-write state to a read-only state.

14. The method according to claim 11, wherein that the at least one second business microservice is configured to, based on the second change information, stop running the primary task comprises:
based on the second change information and a state transition table corresponding to each second business microservice in the at least one second business microservice, changing a state of each second business microservice from a primary state for executing the primary task to a standby state, wherein the state transition table is used to indicate a state transition of each second business microservice.

15. The method according to any one of claims 10 to 14, wherein after the determining second change information, the method further comprises:
based on the second change information, stopping a database change script of the first node, wherein the database change script of the first node is used to update a version of the database and/or update a table structure of the database.

16. An offsite disaster recovery apparatus, wherein the apparatus is applied to a first node in an offsite disaster recovery service, the first node storing an environment for running a primary task of a primary node; the primary node is configured to control a network device to forward network packets; and the apparatus comprises:
a determining module configured to determine first change information, wherein the first change information is used to indicate that an identity of the first node changes from a backup node to a primary node, and the backup node is configured to synchronize data of the primary node; and
a processing module configured to, based on the first change information, stop synchronizing the data of the primary node and run the primary task in the environment.

17. An offsite disaster recovery apparatus, wherein the apparatus is applied to a second node in an offsite disaster recovery service, the second node being configured to control a network device to forward network packets; and the apparatus comprises:
a determining module configured to determine second change information, wherein the second change information is used to indicate that an identity of the second node changes from a primary node to a backup node; and
a processing module configured to, based on the second change information, stop running a primary task.

18. An electronic device, comprising:
at least one processor; and a memory and a communication interface communicatively connected to the at least one processor; wherein
the memory stores instructions executable by the at least one processor; and the at least one processor executes the instructions stored in the memory to enable the electronic device to perform the method according to any one of claims 1 to 15 through the communication interface.

19. A computer-readable storage medium, wherein the computer-readable storage medium stores computer instructions, and when the computer instructions run on a computer, the computer performs the method according to any one of claims 1 to 15.
